# EUROPEAN PATENT APPLICATION

(11) **EP 1 561 948 A2**
(43) Date of publication of application: **10.08.2005**
(21) Application number: 05001578.3
(22) Date of filing: 26.01.2005
(51) Int. Cl.: F04B 27/18

(54) **Control valve for variable displacement compressor**

(30) Priority: 29.01.2004 JP 2004020969
(71) Applicant: TGK COMPANY, LTD., Tokyo 193-0942 (JP)
(72) Inventor: Kawaguchi, Takeshi, Hachioji-shi Tokyo 193-0942 (JP); Kajiwara, Morimitsu, Hachioji-shi Tokyo 193-0942 (JP)
(74) Representative: Grünecker, Kinkeldey, Stockmair & Schwanhäusser Anwaltssozietät

(57) **Abstract**

In the control valve 1 a predetermined space S is formed between a holder 41 and a small-diameter portion 33 of a second plunger 32, to reduce radial attractive magnet forces for the second plunger 32. Axially opposed faces 34a, 41a formed on a large-diameter portion 34 of the second plunger 32 and the holder 41 for achieving an efficient a magnetic circuit, to increase the axial attractive magnet force for the second plunger 32, and to relatively increase the force in valve-closing direction of a valve element 16 connected to the second plunger 32.

## Description

The invention relates to a control valve according to the preamble of claim 1.

The compressor in a refrigeration cycle of an automotive air conditioner is driven by the vehicle engine whose rotational speed varies depending on the vehicle travelling condition. For this reason variable displacement compressors are employed capable of changing the refrigerant discharging capacity without being constrained by the rotational engine speed and to obtain a desired and adequate refrigerating capacity.

One known compressor comprises a wobble plate within the compressor crankcase. The inclination angle of the wobble plate is variable while it is driven by a shaft. Pistons which are coupled to the wobble plate perform reciprocating motions parallel to the shaft and draw refrigerant from a suction chamber into cylinders, compress and discharge the refrigerant into a discharge chamber. The inclination angle can be varied by changing the pressure in the crankcase to change the strokes of the pistons for changing the discharge amount. A control valve controls the pressure Pc in the crankcase, introducing a partial amount of the refrigerant from the discharge chamber (discharge pressure Pd) into the crankcase. The control is carried out by sensing the suction pressure Ps and controlling the flow rate to the discharge chamber such that the suction pressure Ps is held at a constant level. The known control valve has a suction pressure-sensing section and a valve section opening and closing a passage leading to the crankcase according to the value of the suction pressure Ps. One known type of the control valve allows to freely externally set a value of the suction pressure Ps at the start of the variable displacement operation by a solenoid supplied with external electric current. The compressor (JP-A-2000-110731) may be a clutchless type whose shaft is directly connected with the engine.

In the known control valve when the solenoid is de-energized, the valve section is in a fully open state. The crankcase pressure Pc then can be held at a pressure value close to the discharge pressure Pd. The wobble plate is placed substantially at right angles to the shaft (minimum capacity). This means that the discharging capacity can be substantially reduced to approximately zero even with the engine directly connected to the shaft, which makes it possible to dispense with a solenoid clutch.

However, in this control valve the pressure-sensing section and the valve section are arranged with the solenoid therebetween. The pressure-sensing section compares the introduced suction pressure Ps and the atmospheric pressure, via the solenoid. The solenoid has to be accommodated in its entirety within a pressurized chamber meaning that components of the solenoid need to be designed pressure-proof.

To eliminate this inconvenience, another proposed control valve (not prepublished JP-Reg.No.-2003.289581, EP 1 413 752A) is configured such that a plunger assembly of the solenoid is divided into first and second plungers, and a pressure-sensing member, such as a diaphragm or a bellows, is interposed therebetween for sensing the suction pressure, such that the respective valve lift is controlled by the second divisional plunger.

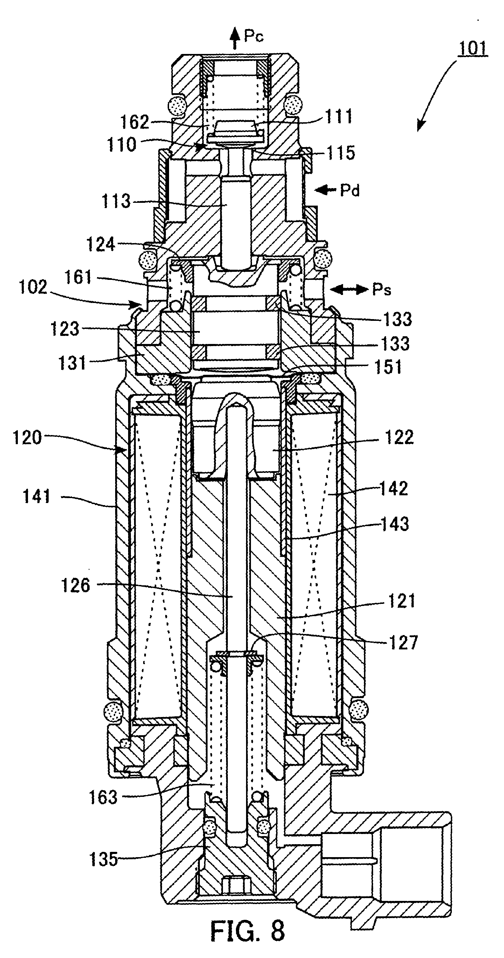

Fig. 8 shows the proposed control valve 101 which comprises a body 102, a valve section 110, a solenoid 120, a core 121, a first plunger 122, and a second plunger 123. The second plunger 123 is axially movable in a holder 131. The second plunger 123 has a peripheral non-magnetic guide 133, e.g. of polytetrafluoroethylene, and of low sliding resistance in the holder 131 to guide the second plunger 123 and to maintain it with a predetermined distance from the inner wall of the holder 131. A circumferential part of the guide 133 is cut open to introduce the suction pressure Ps into a space at a lower end face of the second plunger 123. The second plunger 123 has an annular flange portion 124 at an upper en. A spring 161 is interposed between the flange portion 124 and the holder 131. An axially movable shaft 113 abuts the second plunger 123. The spring 161 has larger spring force than a spring 162 urging the valve element 111 in valve-closing direction. When the solenoid 120 is de-energized, the valve element 111 is lifted from a valve seat 115 (fully open state). Below the second plunger 123, a pressure-sensing member 151 (a diaphragm) is sandwiched between the holder 131 and a casing 141. A pressure chamber of the control valve 101 extends up to a portion partitioned by the pressure-sensing member 151, while a part below this portion receives the atmospheric pressure. The casing 141 contains a solenoid coil 142 and a sleeve 143. The sleeve 143 contains a fixed core 121. Between the core 121 and the pressure-sensing member 151 the first plunger 122 is axially movable within the sleeve 143. An axial shaft 126 is connected at an upper end to the first plunger 122. The lower end of the shaft 126 is supported by a bearing member 135. Between the bearing member 135 and a flange portion 127 of the shaft 126 a spring 163 is urging the first plunger 122 toward the pressure-sensing member 151. The pressure-sensing member 151 fluidally separates a space having the first plunger 122 and a space having the second plunger 123. In other words, a section between the valve section 110 and a portion where the pressure-sensing member 151 is disposed, including the second plunger 123 controlling the valve lift, is formed as a block to which pressure is applied. The solenoid 120 exclusive the second plunger 123 is not accommodated in the pressure chamber which thus may be open to the atmosphere. The second plunger 123 is urged away from the pressure-sensing member 151. When the solenoid is de-energized, any displacement of the pressure-sensing member 151 will not be transmitted to the valve section 110, but the valve section 110 will stay in the fully-open state, to control the minimum compressor displacement. The first and second plungers 123, 122 then are separated. When the solenoid is energized, the plungers 122, 123 are attracted to each other and will behave as one plunger executing the control action. Since there is the pressure-sensing member 151 between the plungers 122, 123, opposed end faces of the plungers 122 are planar or flat, such that a magnetic circuit is generated therebetween when the second plunger 123 is inserted into the holder 131. The attractive force of the solenoid 120 acts on the second plunger 123 in radial direction, and when the attractive force is large, a risk exists that the necessary axial motion of the second plunger 123 will become obstructed, or that undesired vibrations of the second plunger 123 will be caused by the attractive force. To overcome these inconveniences, conventionally the second plunger 123 either is equipped with the peripheral non-magnetic guide 133 or a non-magnetic sleeve (not shown) may instead be interposed between the second plunger 123 and the holder 131. However, any non-magnetic member at this location constitutes an additional component part and increases manufacturing costs. Further, due to radial attractive forces applied to the second plunger 123 from the holder 131, the necessary axial attractive force in the operating direction of the second plunger 123 is weakened. Especially when the first plunger 122 and the core 121 are separated from each other, it may become difficult to obtain sufficient attractive force characteristics. Also a hysteresis effect may have a serious influence, i.e. despite a control position which is set to the same position, the valve element 111 may be controlled to positions, which are different when the valve element 111 is opened or closed, e.g. due to frictional forces caused during the sliding motion.

It is an object of the invention to provide a control valve, particularly for a clutch less compressor, allowing to improve the attractive force characteristics and to reduce manufacturing costs.

This object is achieved by the features of claim 1.

The term "body" is intended to mean a body of the whole control valve. In such a structure formed by assembling a body accommodating the separate members of the valve section and a casing of a solenoid, the entire assembly of the body of the valve section and the casing of the solenoid corresponds to the "body" defined here. The "valve element" and the "valve section" may be configured such that they either can either be separated from each other, or that they may be integral with each other. For the "separated version", it is preferable to provide an additional elastic member urging the valve element toward the valve seat. In the control valve the plunger of the solenoid is divided into the first and second plungers with the pressure-sensing member therebetween, and the valve lift of the valve section is controlled by the second divisional plunger. When the solenoid is de-energized, the pressure-sensing member is moved away from the plunger on one side for controlling the valve lift, thereby inhibiting that displacements of the pressure-sensing member will be transmitted to the valve section. At the same time the valve section is held in fully-open state. This allows to control the compressor to minimum displacement without an electromagnetic clutch otherwise used to mechanically separate the compressor and the engine of the vehicle.

Particularly, the predetermined space is formed between the magnetic member and the small-diameter portion of the second plunger which is inserted into the magnetic member. Compared with an arrangement with a clearance between the magnetic member and the second plunger being small, it is possible to significantly reduce radial attractive forces acting on the second plunger during energization of the solenoid. On the other hand, the large-diameter portion of the axially operating second plunger and the magnetic member have respective axially opposed faces, and the magnetic circuit is formed via the opposed faces during energization of the solenoid. This allows to increase the axial attractive force for the second plunger, so that even when an additional elastic member or the like is provided as the first urging means to impart an urging force in valve-closing direction in addition to the attractive force, this urging force can be relatively small. The second plunger operates in a state connected to the shaft which is axially slidably supported by the body. It thus is possible to move the second plunger in the predetermined operating direction without guiding the second plunger itself. The magnetic member as provided does not need to be a single unitary component part. For example, it may be formed by a part of a yoke as a component of the solenoid such that an end edge of the pressure-sensing member is rigidly fixed to an inner surface of the yoke.

The control valve is configured such that the second plunger comprises small-diameter and large-diameter portions, such that radial attractive forces applied on the second plunger during energization of the solenoid are reduced, while the operating axial attractive force in valve-closing direction is increased. The attractive force characteristics of the control valve are enhanced. When the solenoid is de-energized, the large attractive force is cancelled, so that the valve section easily can be fully opened such that the variable displacement compressor will be switched promptly to the minimum operation mode.

Since the second plunger operates in a state connected to the shaft sliding within the body, no additional component parts are needed, such as a non-magnetic guiding member for the second plunger, a sleeve, and so forth. This results in a reduction of costs through reduction of the number of component parts. The space formed between the second plunger and the magnetic member for inhibiting that the second plunger slides in the body, reduces the hysteresis problem of the control position of the valve element.

Embodiments of the invention will be described with reference to the drawings.
- Fig. 1: is a cross-section of a first embodiment control valve,
- Fig. 2: is a cross-section of a second embodiment of a control valve,
- Fig. 3: is a graph showing attractive force characteristics of control valves for a variable displacement compressor,
- Fig. 4: is a cross-section of a third embodiment of a control valve,
- Fig. 5: is a cross-section of a fourth embodiment of a control valve,
- Fig. 6: is a cross-section of a fifth embodiment of a control valve,
- Fig. 7: is a cross-section of a sixth embodiment of a control valve,
- Fig 8: is a cross-section of another control valve for a variable displacement compressor.

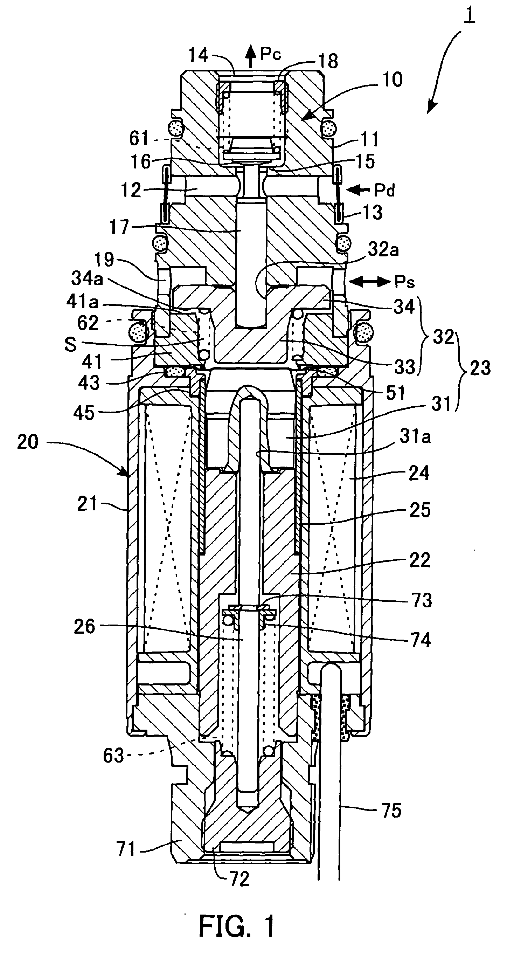

A control valve 1 in Fig. 1 for a variable displacement compressor (not shown) is formed by integrally assembling a valve section 10 used for opening and closing a refrigerant passage for introducing a partial amount of refrigerant discharged from the compressor into the compressor crankcase, and a solenoid 20 controlling the flow rate through the valve section 10 by adjusting the valve lift in the valve section 10.

The valve section 10 includes a body 11 formed with a side port 12 for receiving the discharge pressure Pd. The port 12 is protected by a strainer 13 and communicates via an inside refrigerant passage with a port 14 open in the top of the body 11. The port 14 communicates with the compressor crankcase (controlled pressure Pc).

Between the ports 12, 14, a valve seat 15 is integrally formed with the body 11. At the pressure Pc side of the valve seat 15 an axially movable valve element 16 is provided which is integral with a pressure-sensing piston 17 (shaft) extending downward through a valve hole of the valve seat 15 such that it is axially movably guided with almost no clearance by the body 11. The discharge pressure Pd acts on a narrower or small-diameter portion connecting the valve element 16 and the pressure-sensing piston 17. The outer diameter of the pressure-sensing piston 17 is equal to the inner diameter of the valve hole of the valve seat 15. The pressure-receiving areas of the valve element 16 and the pressure-sensing piston 17 are equal. The upward force of the discharge pressure Pd on the valve element 16 is cancelled by the downward force on the pressure-sensing piston 17, such that the control action of the valve section 10 is not affected by the high discharge pressure Pd.

The valve element 16 is urged by a spring 61 in valve-closing direction. The force of the spring 61 is adjustable by an adjustment screw 18 in the port 14. A port 19 in a lower portion of the body 11 receives the suction pressure Ps.

The solenoid 20 has a casing 21, a core 22 fixed to the casing 21, a plunger 23 for moving the valve element 16 via the pressure-sensing piston 17, a solenoid coil 24 for generating a magnetic circuit including the core 22 and the plunger 23 by electric current supplied from outside, and a spring 63 (second urging means). The plunger 23 is divided into a first plunger 31 and a second plunger 32. Disposed between the body 11 and the casing 21 is a holder 41 (magnetic member) formed by a hollow cylindrical magnetic material. The second plunger 32 is partially axially movably inserted into the holder 41 and is urged by the spring in axial direction towards the second plunger 32.

The second plunger 32 is a bottomed, stepped hollow cylinder, and has a small-diameter portion 33 received within a predetermined radial space S in the holder 41, and a large-diameter, flanged portion 34 on one end of the small-diameter, flanged portion 33. The small-diameter portion 33 has a lower flat face which faces via a diaphragm 51 (suction-pressure-sensing member) a upper flat face of the first plunger 31. The large-diameter portion 34 has a lower flat face 34a which axially faces an upper flat end face 41a of the holder 41. In the space S a spring 62 (first elastic member or urging means) of non-magnetic material (stainless or the like) urges the second plunger 32 in valve-opening direction. The spring 62 is located between the face 34a of the second plunger 32 and a stepped surface at a lower portion of the holder 41. The lower end of the pressure-sensing piston 17 is slidably inserted into an insertion hole 32a of the large-diameter portion 34 of the second plunger 32. The second plunger 32 either operates in unison with the pressure-sensing piston 17, or operates while being guided along the pressure-sensing piston 17, without the possibility of completely leaving the pressure-sensing piston 17, due to the depth of the insertion hole 32a, a balance between the urging forces of the springs 61 and 62, etc.

The spring 62 has a larger spring force than the spring 61. When the solenoid 20 is de-energized, the second plunger 32 pushes the pressure-sensing piston 17 upward until the second plunger 32 abuts at the ceiling of the chamber communicating with the port 19. Then the valve element 16 is held in its fully open position.

The diaphragm 51 forms a pressure-sensing member below the second plunger 32 and is peripherally sandwiched between the holder 41 and the casing 21, and is sealed by a packing 43. The sandwiching of the diaphragm 51 is realized by rigidly fixing an upper end edge of the casing 21 to a lower end of the body 11, with the holder 41 held therebetween e.g. by caulking. Thus, a part forming a pressure chamber of the control valve 1 extends to the partition of the diaphragm 51, while another part below portion receives atmospheric pressure.

The diaphragm 51 is e.g. one piece of a polyimide film. However, a plurality of overlaid polyimide film leaves or pieces instead may be used to increase the resistance against breakage under repeated collisions of the first plunger 31. Although the diaphragm 51, preferably, may be a resin material, such as polyimide, it may be of metallic material as well, such as beryllium copper or stainless steel.

The first plunger 31 is cylindrical with a tapered upper end portion, and is axially movable within a hollow cylindrical sleeve 25 rigidly fixed to an upper portion of the solenoid 20. A stepped hollow cylindrical core 22 having a lower diametrically expanded portion is inserted and fixed into a lower opening of the sleeve 25.

A shaft 26 extends through the core 22. An upper shaft end is slidably inserted into a lower central insertion hole 31a of the first plunger 31. The shaft 26 supports the first plunger 31 from below. The lower shaft end is supported by a bearing recess in an adjustment screw 72 which is screwed into a handle 71 closing a lower opening end of the casing 21. A stop ring 73 seats upward on an intermediate portion of the shaft 26. The movement of a spring retainer 74 of the spring 63 (second urging means) is restricted by the stop ring 73. The first plunger 31 is urged by the spring 63 away from the core 22. The force of the spring 63 can be changed by the adjustment screw 72, e.g. to adjust a setting value for the control valve 1.

A non-magnetic material collar 45 mounted on an upper end of the sleeve 25 separates the casing 21 and the first plunger 31 such that almost no attractive magnet force is transmitted, and determines an effective suction pressure-receiving diameter of the diaphragm 51.

A solenoid coil 24 surrounds the sleeve 25 and the core 22. The solenoid coil 24 in turn is surrounded by the magnetic material casing 21, and can be selectively supplied with control current via a harness 75.

The body of the whole control valve 1 is formed by the body 11, the casing 21, and the handle 71. The magnetic circuit is formed by the core 22, the first plunger 31, the second plunger 32, the holder 41, the casing 21, and so forth. In other words, when the solenoid 20 is energized, the magnetic circuit is formed via the face 34a opposed to the operating direction (axial direction) of the second plunger 32.

In Fig. 1 the solenoid 20 is de-energized and the suction pressure Ps is high. That is a state in which the air conditioner is not in operation. The first plunger 31 abutting the diaphragm 51 is displaced downward against the load of the spring 63, into abutment with the core 22. The second plunger 32 is urged upward by the spring 62, has left the first plunger 31 and urges the valve element 16 toward its fully open position. Even when the shaft of the compressor is still driven by the engine, the variable displacement compressor is operating with minimum displacement.

When a maximum control current is supplied to the solenoid coil 24 (the automotive air conditioner having been started) the first plunger 31 is pressed downward by the high suction pressure Ps into abutment with the core 22, so that even if the first plunger 31 is attracted by the core 22, it will remain in the same position. In this case, the first plunger 31 and the core 22 behave like a fixed core, so that the first plunger 31 attracts the second plunger 32 against the urging force of the spring 62, until the second plunger 32 is attached to the first plunger 31, whereby the second plunger 32 is moved downward. The spring 61 pushes the valve element 16 on the valve seat 15, to fully close the valve section 10. The passage between the discharge chamber and the crankcase becomes blocked. The variable displacement compressor is promptly shifted into the operation with maximum capacity.

When the variable displacement compressor continues to operate with the maximum capacity, the suction pressure Ps will fall enough. The diaphragm 51 senses the lower suction pressure Ps and attempts to move upward. If then the control current for the solenoid coil 24 has decreased according to the set temperature of the air conditioner, the second plunger 32 and the first plunger 31 in attracted state will move in unison upward to a position where the force of the suction pressure Ps, the loads of the springs 61, 62, and 63, and the attractive force of the solenoid 20 are balanced. The valve element 16 is pushed upward by the second plunger 32 away from the valve seat 15 and is set to a predetermined valve lift. Refrigerant having discharge pressure Pd is introduced into the crankcase at a flow rate controlled to a value dependent on the valve lift. The variable displacement compressor is shifted to operation with the displacement corresponding to the control current.

When the control current is constant, the diaphragm 51 senses the suction pressure Ps to control the valve lift of the valve section 10. For example, when the refrigerating load increases, the suction pressure Ps will become high, and the first plunger 31 is displaced downward so that the valve element 16 decreases the valve lift, causing the compressor to operate by increasing the displacement. When the refrigerating load decreases, the suction pressure Ps will become low, and the first plunger 31 is displaced upward to increase the valve lift, causing the variable displacement compressor to operate by decreasing the discharge capacity. In this way the control valve controls the discharge capacity such that the suction pressure Ps is made constant.

Since the predetermined relatively large radial space S is formed between the holder 41 and the small-diameter portion 33 of the second plunger 32 it is possible to reduce the radial attractive magnet forces acting on the second plunger 32 during energization of the solenoid 20. In the meanwhile, the axially opposed faces 34a and 41a are arranged between the large-diameter portion 34 of the second plunger 32 and the holder 41, meaning that the magnetic circuit is formed via the opposed faces during energization of the solenoid 20. This makes it possible to increase the attractive force in the operating direction of the second plunger 32. As a result, the attractive force in the valve-closing direction of the valve element 16 can be relatively increased during energization of the solenoid 20. This enhances the attractive force characteristic of the whole control valve.

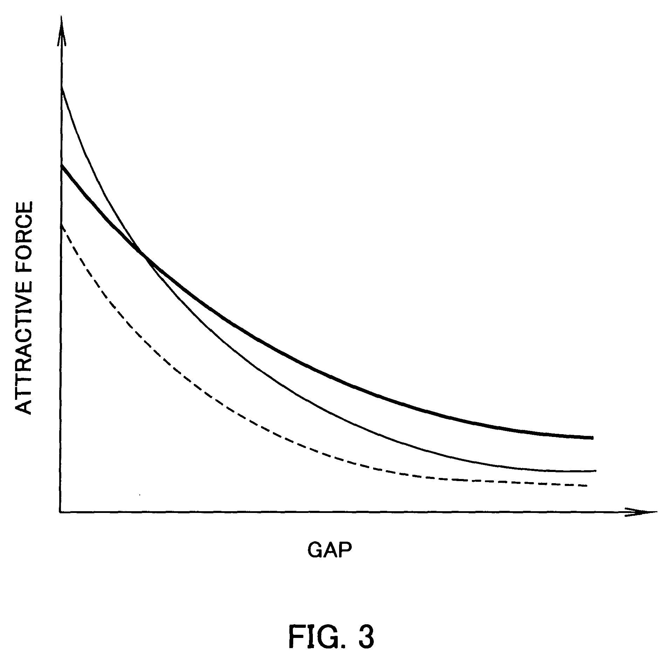

In Fig. 3, the horizontal axis represents the magnitude of a gap in the magnetic circuit of the control valve 1. The vertical axis represents the magnitude of the axial attractive force of the solenoid. A dotted line indicates the attractive force characteristic of the control valve 101 shown in Fig. 8, in which the second plunger 123 receives strong radial attractive magnet forces. A thin solid line indicates the attractive force characteristic of the control valve 1 shown in Fig. 1, in which the second plunger 32 mainly receives an axial attractive force.

Since, according to the invention, the attractive force in the valve-closing direction of the valve element 16 is increased significantly, it is possible to reduce the force of the spring 61 assistingly urging the valve element 16 in valve-closing direction. As a result, when the solenoid 20 is de-energized, inversely, it becomes easy to fully open the valve section 10, and to promptly shift the variable displacement compressor to the minimum operation mode.

Since the second plunger 32 can operate in a state connected to the axially slidably guided pressure-sensing piston 17, the second plunger 32 can move axially without another mechanical guidance. This makes it unnecessary to additionally incorporate component parts, such as a non-magnetic material guiding member for the second plunger 32, a sleeve, and so forth, thereby enabling reduction of costs through reduction of the number of component parts.

Since the space S between the second plunger 32 and the holder 41 inhibits the second plunger 32 from mechanically sliding within the body 11, it is possible to reduce the hysteresis of the valve element 16 with respect to its control position. Finally, the large radial space S ideally allows to arrange the spring 62 there.

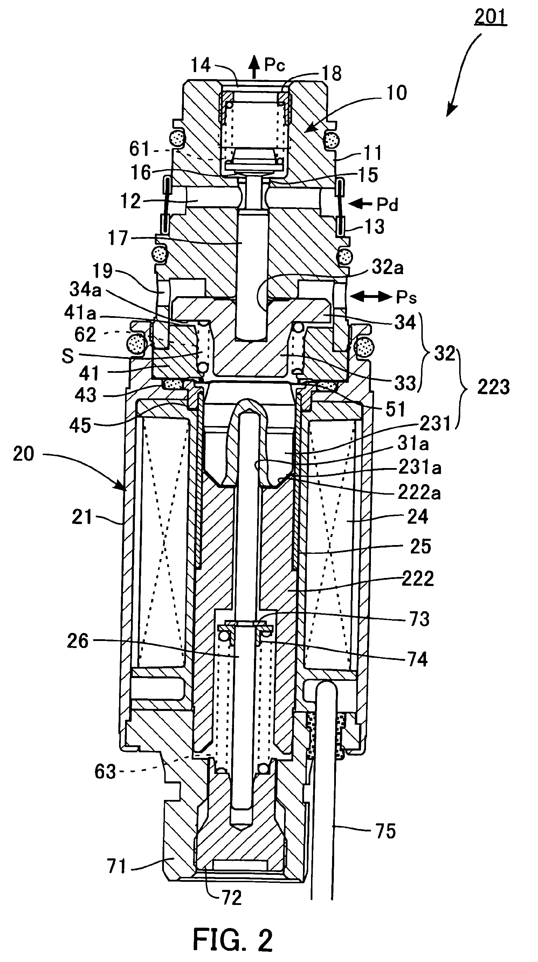

The second embodiment of the control valve 201 in Fig. 2 is similar to the first embodiment, except that the opposed faces of the first plunger and the core have different geometric configurations.

The opposed end faces of the first plunger 31 and the core 22 extend radially in Fig. 1 and have planar shapes approximately parallel with each other. In contrast, in the control valve 201 in Fig. 2 the face 231a of the first plunger 231, opposed to the core 222, is a tapered surface protruding to have a conical shape except a central portion. The face 222a of the core 222, opposed to the first plunger 231, is a tapered surface which appears to be formed by cutting off a conical portion of the core except a central portion, and is conical complementary to the opposed surface 231a. Since the opposed faces are tapered and sloped, there occurs the phenomenon of so-called magnetic leakage, i.e. a component of the radial attracting forces (at right angles to the axial direction) as the proper attracting direction is generated in a magnetic circuit. This reduces the attractive force generated when the first plunger 231 and the core 222 are close to each other. Inversely, when the first plunger 231 and the core 222 are distant from each other, although a distance by which the first plunger 231 and the core 222 are spaced from each other is the same, the shortest distance between the faces 231a and 222a is reduced, such that even the magnetic gap width is reduced. As a result, the attractive force acting between the tapered faces 231a and 222a will be higher than between parallel radial planes. This allows to further increase the attractive force acting between the first plunger 231 and the core 222 when they are distant from each other.

In Fig. 3, a thick solid line indicates the attractive force characteristic of the control valve 201 of Fig. 2. When the gap between the first plunger 231 and the core 222 is small, the attractive force is smaller than in the first embodiment of Fig. 1. However, similarly to the first embodiment, the opposed surfaces 34a and 41a axially opposed to each other are formed also in Fig. 2 on the large-diameter portion 34 of the second plunger 32 and the holder 41 to thereby increase the attractive force in the axial direction, so that it is possible to obtain a larger attractive force than in the control valve 101 shown in Fig. 8.

On the other hand, in Fig. 2 when the distance between the first plunger 231 and the core 222 is large, the attractive force acting therebetween is larger than in the first embodiment of Fig. 1.

Also when in Fig. 2 the first plunger 231 and the core 222 are close to each other, it is possible to obtain a sufficiently larger attractive force than in the control valve 101 shown in Fig. 8, and at the same time even when the distance between the first plunger 231 and the core 222 is large, a large attractive force can be obtained, so that it is possible to obtain a larger and more stable attractive force in total.

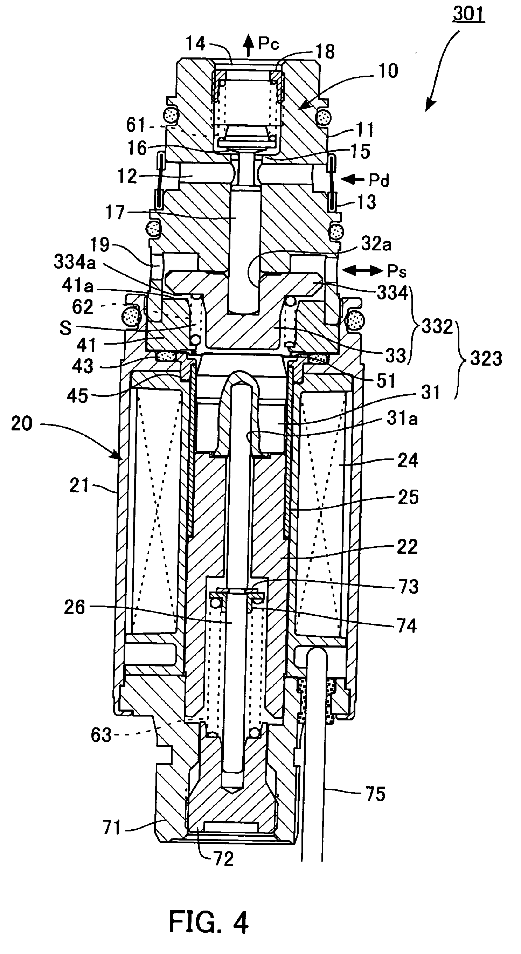

The third embodiment of the control valve 301 in Fig. 4 is similar to the first embodiment of Fig. 1, except that the large-diameter portion of the second plunger is different in configuration.

In Fig. 4, the shape of the large-diameter portion 334 of the second plunger 332 (both formed by dividing a plunger 323) is different from the large-diameter portion in Fig. 1. A peripheral portion of the large-diameter portion 334, opposed to the end face 41a of the holder 41, is partially cut off such that a peripheral area of a face 334a of the large-diameter portion 334 has a tapered shape sloped in a direction away from the holder 41.

The magnetic gap between the second plunger 332 and the holder 41 is increased by the above configuration, whereby the attractive force can be made lower than in the case of the first embodiment of Fig. 1. In other words, although the attractive force characteristic could be enhanced by the first embodiment, if the opposed surfaces of the second plunger 332 and the holder 41 are designed as shown in Fig. 4, it is possible to control the attractive force to a desired value.

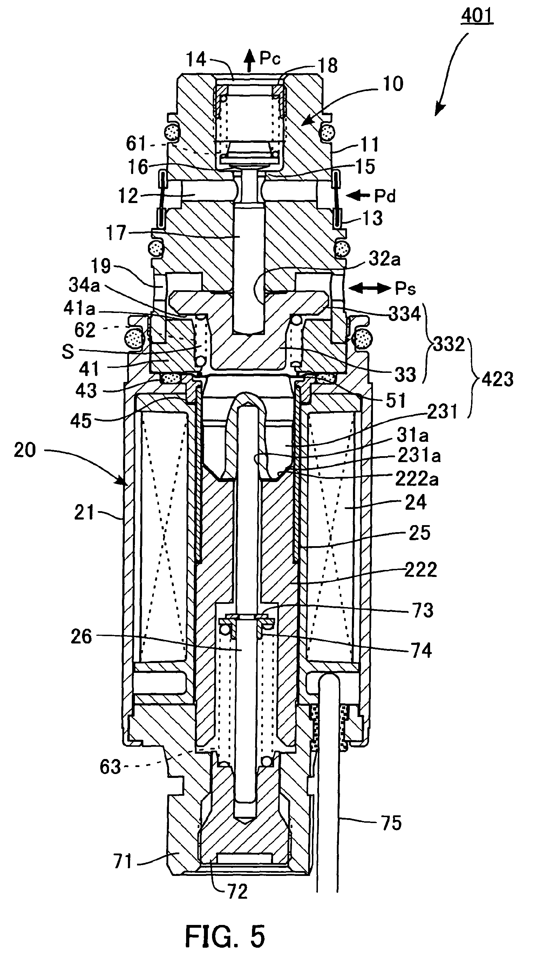

The fourth embodiment of a control valve 401 in Fig. 5 is similar to the third embodiment of Fig. 4, except that the opposed surfaces of the first plunger and the core are different. The respective opposed faces 231 a and 222a of the first plunger 231 of a plunger 423 and the core 222 are formed as tapered surfaces having complementary shapes to each other, similar to the second embodiment of Fig. 2. As a result, a large attractive force can be obtained also when the distance between the first plunger 231 and the core 222 is large, so that it is possible to obtain a larger and more stable attractive force.

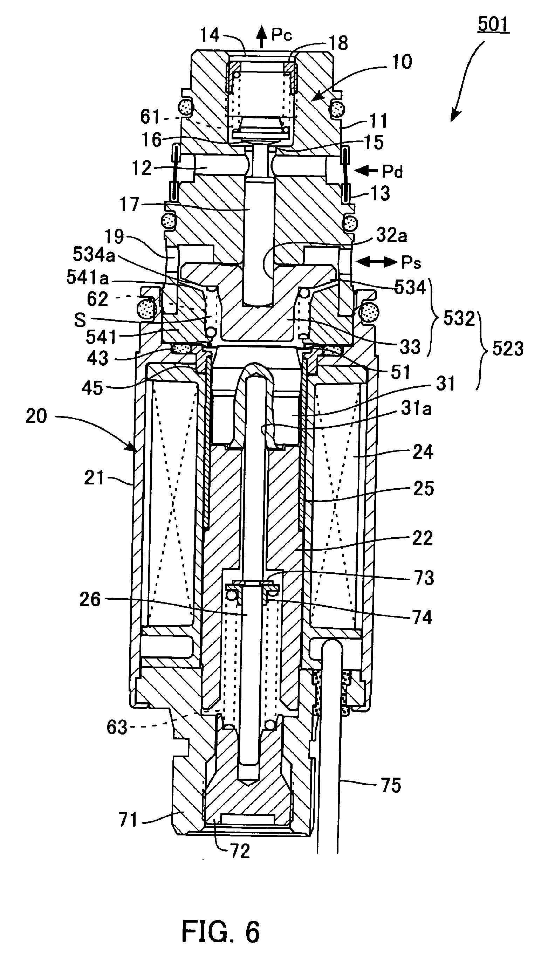

The fifth embodiment of the control valve 501 in Fig. 6 is similar to the first embodiment of Fig. 1, except that the large-diameter portion of the second plunger and the holder are different.

In the control valve 501 a large-diameter portion 534 of a second plunger 532 (formed by dividing a plunger 523), and a holder 541 opposed to the large-diameter portion 534 are formed differently.

A face 534a of the large-diameter portion 534, opposed to the holder 541, is formed as a tapered surface sloped toward an outer periphery thereof in a direction away from the holder 541. A face 541a of the holder 541, opposed to the large-diameter portion 534, is formed as a tapered surface having a complementary shape to the face 534a, and is sloped such that the faces 541a, 534a are is substantially parallel. The opposed faces have respective tapered shapes and are sloped to allow the occurrence of the phenomenon of magnetic leakage, in which a component of the radial attractive forces at right angles to the axial direction as the proper attracting direction, is generated in a magnetic circuit. This reduces the attractive force generated when the large-diameter portion 534 of the second plunger 532 and the holder 541 are close to each other. Inversely, when the large-diameter portion 534 and the holder 541 are distant from each other, although an axial distance by which the large-diameter portion 534 of the second plunger 532 and the holder 541 are spaced from each other is the same, the shortest distance between the opposed surfaces 534a and 541a is reduced, and hence the magnetic gap can be practically reduced. As a result, the attractive force acting between the opposed faces 534a and 541a can be made higher than an attractive force acting between parallel radial planes.

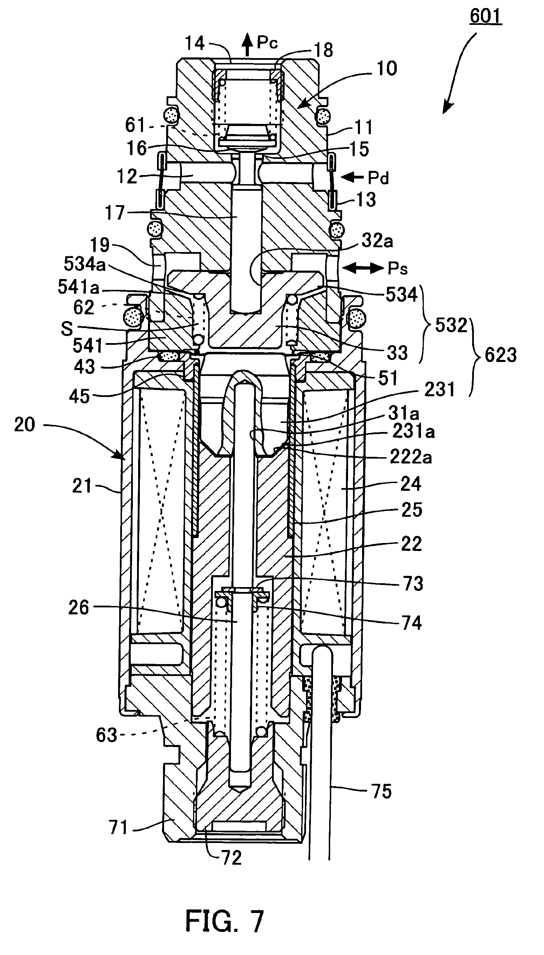

The sixth embodiment of the control valve 602 of Fig. 7 is similar to the fifth embodiment of Fig. 6, except that the opposed surfaces of the first plunger and the core are different.

In the control valve 601 opposed faces 231a and 222a of the first plunger 231 of a plunger 623 and the core 222 are complementarily tapered surfaces similar to the second embodiment of Fig. 2.

A large attractive force can be obtained also when the distance between the first plunger 231 and the core 222 is large, so it is possible to obtain a larger and more stable attractive force in total.

Although in the illustrated control valves a diaphragm is employed as a pressure-sensing member, this is not limitative, but other types of pressure-sensing members, such as bellows or the like, may be employed. Further, although in the embodiments the holder as a magnetic member is formed separately from the casing of the solenoid with the diaphragm interposed between the holder and the casing, the holder instead may be integral with the casing or yoke of the solenoid as a part of the casing, and the pressure-sensing member, such as a diaphragm or the like, may be disposed at a predetermined location on an inner peripheral surface of the casing. Such a disposition can be realized e.g. by rigidly fixing the periphery of the diaphragm or the like to the casing e.g. by welding. Further, although in the embodiments the valve element 16 and the pressure-sensing piston 17 are integrally formed with each other, the valve element may be configured e.g. by a ball valve such that the ball valve can be supported by a shaft in place of the pressure-sensing piston 17. Although in the embodiments different tapered shapes are formed on the first plunger and the core or on the second plunger and the holder, the tapered shapes are not limited to the described shapes, but the angles and directions of the tapered shapes, and the starting points of tapers can be changed as required.

## Claims

1. A control valve (1, 201, 301, 401, 501, 601) for a variable displacement compressor to control a pressure within a compressor crankcase to change the compressor refrigerant discharging capacity, comprising:
a body (11) defining a refrigerant passage connected to the discharge side and the crank case;
a refrigerant passage flow rate adjusting valve section (10) including an axially movable valve element (16), and a shaft axially slidably supported by the body (11) for supporting the valve element (16) such that the valve element (16) and the shaft operate in unison, and
a solenoid (20) including a fixed core (22, 222), a plunger (23, 223, 323, 423, 523, 623) for moving the valve element (16) via the shaft relative to the valve seat (15), and a solenoid coil (24) for generating a magnetic circuit including the plunger and the core by electric current supplied from outside;
**characterised in that**
the plunger (23, 223, 323, 423, 523, 623) is formed by arranging a first plunger (31, 231) opposed to the core (22, 222), and a second plunger (32, 332, 532) to which an end of the shaft remote from the valve element (16), is connected, in series in an axial direction, the plunger being formed by arranging a suction pressure-sensing member (51), and a hollow cylindrical magnetic member (41, 541) fixing the suction pressure-sensing member to the solenoid (20), between the first and second plungers (31, 231; 32, 332, 532),
that the first plunger (31, 231) is configured to be urged in a direction away from the core (22, 222) by a second urging means, and when the solenoid (20) is energized the first plunger (31, 231) is configured to axially support the second plunger (32, 332, 532), and
that the second plunger (32, 332, 532) includes a small-diameter portion (33) inserted into the magnetic member (41, 541) with a predetermined at least radial space (S) formed therebetween, and a large-diameter radially outwardly extending flange portion (34, 334, 534) having a lower face (34a, 334a, 534a) which is axially opposed to an upper face (41a, 541a) of the magnetic member (41, 541), the second plunger (32, 332, 532) being urged in a direction away from the first plunger (31, 231) by a first urging means, while during energization of the solenoid (20) the magnetic circuit is formed via the opposed faces.

2. The control valve as in claim 1, **characterised in that** the first urging means is a non-magnetic material elastic member(62) disposed in the space (S) between the small-diameter portion (33) and the magnetic member (41, 541).

3. The control valve as in claim 1, **characterised in that** the first plunger (231) and the core (222) have respective opposed tapered faces (231a, 222a) having complementary shapes to each other.

4. The control valve as in claim 1, **characterised in that** the second plunger (532) and the magnetic member (541) have respective opposed tapered faces (534a, 541a) having complementary shapes to each other.

5. The control valve as in claim 1, **characterised in that** the second urging means is an elastic member (63) disposed between the first plunger (31, 231) and a casing (21) of the solenoid (20).
